(19) Europäisches Patentamt
European Patent Office
Office européen des brevets

(11) **EP 1 801 693 A1**

(12) **DEMANDE DE BREVET EUROPEEN**

(43) Date de publication:
**27.06.2007 Bulletin 2007/26**

(51) Int Cl.:
***G06F 7/535*** *(2006.01)*

(21) Numéro de dépôt: **06025270.7**

(22) Date de dépôt: **07.12.2006**

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK YU**

(30) Priorité: **20.12.2005 FR 0512913**

(71) Demandeur: **STMicroelectronics SA**
**92120 Montrouge (FR)**

(72) Inventeurs:
• **Moreaux, Christophe**
**13109 Simiane (FR)**
• **Naura, David**
**13100 Aix En Provence (FR)**
• **Kari, Ahmed**
**13100 Aix en Provence (FR)**
• **Rizzo, Pierre**
**13100 Aix En Provence (FR)**

(74) Mandataire: **Marchand, André**
**OMNIPAT,**
**24 Place des Martyrs de la Résistance**
**13100 Aix-en-Provence (FR)**

(54) **Procédé pour diviser un nombre par un numérateur en forme de puissance de 2**

(57) L'invention concerne un procédé pour diviser un nombre N1 par un nombre pouvant s'écrire sous la forme $2^n/k$, n et k étant des entiers, et obtenir un résultat N2. Selon l'invention le résultat N2 est calculé en additionnant des termes $N1 \cdot Ki/2^{n-i}$ pour i allant de 0 à N, les termes Ki étant les bits constitutifs K0, K1, K2, ... $K_{N-1}$ du nombre k exprimé en binaire. Application notamment à la réalisation d'un circuit de calibrage de signal d'horloge dans un transpondeur UHF.

FIG. 6

EP 1 801 693 A1

**Description**

La présente invention concerne un procédé pour diviser un premier nombre binaire N1 par un second nombre binaire pouvant s'écrire sous la forme $2^n/k$, n et k étant des nombres entiers, pour obtenir un résultat N2.

La division binaire est une opération arithmétique pouvant être mise en oeuvre de diverses manières dans un circuit intégré. Lorsque cela est possible, la division binaire peut être effectuée avec un circuit à logique câblée de structure très simple. Par exemple, la division d'un nombre N1 par un nombre formant une puissance de 2, soit le calcul de $N1/2^n$, est réalisée en effectuant n décalages à droite des bits du nombre N1. Par exemple, la division de 15, soit 00001111 en binaire, par 16, est obtenue en effectuant quatre décalages à droite des bits du nombre N1, car $16 = 2^4$. On obtient le nombre 00000000,1111 soit 0,9375 en décimal.

Dans le cadre de la réalisation d'un circuit intégré sans contact RFID conforme à la spécification industrielle EPC™-GEN2 ("*Radio-Frequency Identity Protocols Class-1 Generation-2 - UHF RFID Protocol for Communications at 860 MHz - 960 MHz")*, les auteurs de la présente invention ont été confrontés à la nécessité de prévoir un circuit capable de diviser un nombre binaire par 64/3.

Une telle division par 64/3 est prévue par la spécification précitée afin de diviser une valeur de comptage fournie par un compteur qui est activé pendant toute la durée d'un évènement. Le comptage est cadencé par un signal d'horloge interne. Après acquisition de la valeur de comptage, le circuit intégré doit diviser cette valeur par 64/3. Le résultat de la division est ensuite utilisé comme valeur de consigne pour fournir un signal de sortie dont la période est synchronisée avec la durée de l'événement.

Bien qu'une telle division puisse être réalisée avec des algorithmes de calcul sophistiqués, en utilisant un microprocesseur ou un co-processeur arithmétique, les circuits intégrés sans contact UHF réalisés selon la spécification EPC™-GEN2 sont destinés à la fabrication d'étiquettes sans contact (contactless tags) à faible prix de revient. Ils doivent par conséquent présenter une structure d'une grande simplicité. Ainsi, l'emploi d'un circuit de calcul coûteux et occupant une surface de silicium importante n'est pas envisageable. Notamment, l'emploi d'un microprocesseur ou d'un coprocesseur est exclu. La division doit être faite par un circuit à logique câblée et de préférence de façon asynchrone, c'est-à-dire sans nécessiter de cadencer des étapes de calcul au moyen d'un signal d'horloge.

Ainsi, la présente invention vise un procédé permettant notamment de diviser un nombre N1 par 64/3, de façon simple et au moyen d'un circuit à logique câblée.

Cet objectif est atteint par la prévision d'un procédé pour diviser un premier nombre binaire N1 par un second nombre binaire pouvant s'écrire sous la forme $2^n/k$, n et k étant des nombres entiers, et obtenir un résultat N2, le procédé comprenant une étape de calcul de termes $N1*Ki/2^{n-1}$ au moyen d'un premier circuit à logique câblée, pour i allant de 0 à N, les termes Ki étant les bits constitutifs K0, K1, K2,...$K_{N-1}$ du nombre k exprimé en binaire, et une étape d'addition des termes $N1*Ki/2^{n-i}$ au moyen d'un second circuit à logique câblée.

Selon un mode de réalisation, le procédé comprend, pour le calcul de chaque terme $N1*Ki/2^{n-i}$ pour lequel Ki=1, l'application de n-i décalages à droite aux bits du nombre N1, sans report après la virgule et en introduisant une erreur d'arrondi.

Selon un mode de réalisation, l'erreur d'arrondi dans la division de N1 par $2^{n-i}$ est compensée en tout ou en partie en ajoutant un offset au nombre N1 avant d'appliquer les n-i décalages à droite aux bits du nombre N1.

Selon un mode de réalisation, un offset identique est ajouté au nombre N1 pour le calcul de chaque terme $N1*Ki/2^{n-i}$ pour lequel Ki=1. Selon un mode de réalisation, le nombre N1 est fourni par un compteur configuré pour compter à partir de l'offset au lieu de compter à partir de 0.

Selon un mode de réalisation, k = 3, et $N2 = N1/2^n + N1/2^{n-1}$, le terme $N1/2^n$ étant calculé en appliquant n décalages à droite aux bits d'un nombre égal à la somme de N1 et d'un premier offset, le terme $N1/2^{n-1}$ étant calculé en appliquant n-1 décalages à droite aux bits d'un nombre égal à la somme de N1 et d'un second offset, les premier et second offsets pouvant être égaux.

La présente invention concerne également un circuit diviseur pour diviser un premier nombre binaire N1 par un second nombre binaire pouvant s'écrire sous la forme $2^n/k$, n et k étant des nombres entiers, et obtenir un résultat N2, le circuit comprenant un premier circuit à logique câblée pour calculer des termes $N1*Ki/2^{n-i}$ pour i allant de 0 à N, Ki étant les bits constitutifs K0, K1, K2,...$K_{N-1}$ du nombre k exprimé en binaire, et un second circuit à logique câblée pour additionner les termes $N1*Ki/2^{n-i}$.

Selon un mode de réalisation, le premier circuit à logique câblée est agencé pour calculer chaque terme $N1*Ki/2^{n-i}$ pour lequel Ki=1 en appliquant n-i décalages à droite aux bits du nombre N1, sans report après la virgule et en introduisant une erreur d'arrondi.

Selon un mode de réalisation, le circuit diviseur comprend des moyens pour ajouter un offset au nombre N1 avant d'appliquer les décalages à droite aux bits du nombre N1, de manière à compenser en tout ou en partie l'erreur d'arrondi dans la division de N1 par $2^{n-i}$.

Selon un mode de réalisation, les moyens pour ajouter un offset appliquent un offset identique au nombre N1 pour le calcul de chaque terme $N1*Ki/2^{n-i}$ pour lequel Ki=1. Selon un mode de réalisation, le nombre N1 est fourni par un compteur échantillonneur configuré pour compter à partir de l'offset au lieu de compter à partir de 0, de manière à fournir le nombre N1 augmenté de l'offset.

Selon un mode de réalisation dans lequel k = 3, et $N2 = N1/2^n + N1/2^{n-1}$, le terme $N1/2^n$ est fourni par un premier circuit à logique câblée qui applique n décalages à droite aux bits d'un nombre égal à la somme de N1 et d'un premier offset, et le terme $N1/2^{n-1}$ est fourni par un second circuit à logique câblée qui applique n-1 décalages à droite aux bits d'un nombre égal à la somme de N1 et d'un second offset, les premier et second offsets pouvant être égaux.

La présente invention concerne également un circuit intégré, notamment du type transpondeur, comprenant un circuit diviseur selon l'invention.

Selon un mode de réalisation, le circuit diviseur est agencé pour diviser une valeur de comptage fournie par un compteur.

Selon un mode de réalisation, le compteur est configuré pour compter à partir d'une valeur d'offset au lieu de compter à partir de 0, de manière à fournir le nombre N1 augmenté de l'offset.

Ces objets, caractéristiques et avantages ainsi que d'autres de la présente invention seront exposés plus en détail dans la description suivante du procédé de l'invention et d'exemples de réalisation de diviseurs à logique câblée mettant en oeuvre ce procédé, faite à titre non limitatif en relation avec les figures jointes parmi lesquelles :

- la figure 1 représente sous forme de schéma bloc un diviseur à logique câblée mettant en oeuvre un premier aspect de l'invention,
- la figure 2 représente un mode de réalisation d'un circuit à décalage représenté sous forme de bloc en figure 1,
- la figure 3 représente une courbe de distribution des erreurs d'arrondi obtenues lorsqu'une division d'un nombre est effectuée par décalage à droite sans report après la virgule,
- la figure 4 représente une courbe de distribution des erreurs d'arrondi lorsque la division par décalage à droite est précédée d'une étape de correction d'erreur selon un second aspect de l'invention,
- la figure 5 représente sous forme de schéma bloc un exemple de réalisation d'un diviseur à logique câblée mettant en oeuvre le premier et le second aspects de l'invention,
- la figure 6 représente sous forme de schéma bloc une variante de réalisation du diviseur de la figure 5,
- la figure 7 représente schématiquement la structure d'un circuit intégré sans contact,
- la figure 8 représente des éléments du circuit intégré de la figure 7 mettant en oeuvre le procédé de l'invention, et
- la figure 9 est un chronogramme représentant des signaux logiques et des valeurs de calcul illustrant le fonctionnement des éléments représentés en figure 8.

L'invention prévoit un procédé de division d'une grande simplicité de mise en oeuvre. Un premier aspect de l'invention concerne la mise en oeuvre de la division sous forme d'étapes de calcul élémentaires, et un second aspect de l'invention concerne la compensation d'erreurs d'arrondi introduites par les étapes de calcul élémentaires.

Premier aspect de l'invention

Comme indiqué au préambule, le problème technique que l'invention vise initialement à résoudre est d'effectuer la division d'un nombre binaire par 64/3 au moyen d'un circuit à logique câblée. Pour être solutionné, le problème particulier est généralisé sous forme de problème technique général, à savoir : diviser un nombre N1 par un nombre pouvant s'écrire sous la forme $2^n/k$, n et k étant des entiers. On remarque en effet que $64 = 2^6$.

Pour atteindre cet objectif, une première idée de l'invention est de décomposer le nombre $k/2^n$ sous forme de série. On considère tout d'abord que diviser le nombre N1 par $2^n/k$ revient à multiplier N1 par $k/2^n$. En appelant N2 le résultat de la division, on peut ainsi écrire :

$$N2 = N1/(2^n/k) = N1 * k/2^n \quad (1)$$

Par ailleurs le nombre k peut s'écrire, en binaire, sous la forme suivante :

$$k = K0*2^0 + K1*2^1 + K2*2^2 + ... + K_{N-1}*2^{(N-1)} \quad (2)$$

K0, K1, K2, ... $K_{N-1}$ étant les bits constitutifs du nombre k, égaux à 0 ou à 1.

En combinant les équations (1) et (2), il vient que $k/2^n$ peut s'écrire sous la forme suivante :

$$k/2^n = K0*2^0/2^n + K1*2^1/2^n + K2*2^2/2^n + \ldots + K_{N-1}*2^{(N-1)}/2^n \quad (3)$$

soit :

$$k/2^n = K0/2^n + K1/2^{n-1} + K2/2^{n-2} + \ldots + K_{N-1}/2^{(n-(N-1))} \quad (4)$$

En combinant les équations (1) et (4), il vient que :

$$N2 = N1*K0/2^n + N1*K1/2^{n-1} + N1*K2/2^{n-2} + \ldots + N1*K_{N-1}/2^{(n-(N-1))} \quad (5)$$

Le résultat de la division de N1 par $2^n/k$ est donc égal à la somme de termes $N1*Ki/2^{n-i}$ pour i allant de 1 à N-1, soit :

$$N2 = \sum_{i=0}^{i=N-1} N1*Ki/2^{n-i} \quad (6)$$

Chacun de ces termes est nul quand Ki = 0 et est non nul quand Ki = 1. Un terme $N1*Ki/2^{n-i}$ non nul est donc égal à $N1/2^{n-i}$. Ainsi, chaque terme non nul est le résultat de la division du nombre N1 par une puissance de 2.

Dans le cas particulier de la division par 64/3, n est égal à 6 et k est égal à 3. Ainsi, k est égal à 00000011 en binaire, soit K0 = 1 et K1 = 1, les autres bits $K_i$ étant égaux à 0. L'équation (6) devient :

$$N2 = N1/(2^6) + N1/(2^5) = N1/64 + N1/32 \quad (7)$$

N2 est ainsi la somme des résultats de deux divisions. Selon l'invention, chaque division est effectuée par décalage à droite des bits constitutifs du nombre N1 et sans report après la virgule.

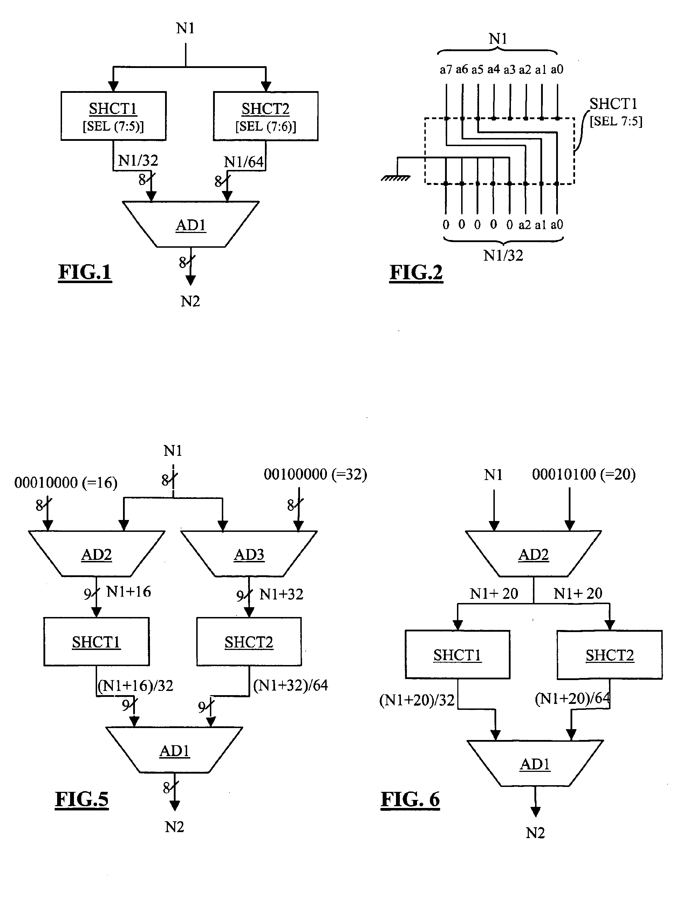

La figure 1 représente un diviseur selon l'invention mettant en oeuvre l'équation 7. On suppose ici que le diviseur est un circuit fonctionnant sous 8 bits. Le diviseur comprend deux circuits à décalage SHCT1, SHCT2 recevant chacun le nombre N1 en entrée et fournissant respectivement les termes N1/32 et N1/64. La sortie de chaque diviseur SHCT1, SHCT2 est appliquée sur une entrée d'un circuit additionneur AD1 dont la sortie fournit le résultat N2 = N1/64 + N1/32 soit N2 = N1/(64/3) conformément à la relation 7.

Chaque circuit à décalage SHCT1, SHCT2 effectue un simple décalage à droite des bits de poids fort vers les bits de poids faible avec insertion de 0 par la gauche (décalage dit "à droite" par convention, étant sous-entendu que les bits de poids fort sont placés à gauche). Le circuit SHCT1 applique cinq décalages à droite aux bits du nombre N1, soit une division par 32 ($2^5$) tandis que le circuit SHCT2 applique six décalages à droite aux bits du nombre N1, soit une division par 64 ($2^6$).

La figure 2 représente un exemple de réalisation du circuit SHCT1. Ce circuit effectue simplement un aiguillage des bits a7, a6, a5 de manière que ces bits deviennent les bits a2, a1, a0 du résultat N1/32, les bits de poids fort étant mis à 0. Le même principe est utilisé pour réaliser le circuit SHCT2 (non représenté), les bits a7, a6 devenant les bits a1, a0 du résultat N1/64.

Ce procédé de division du nombre N1 par 64/3 est généralisable à toute division par $2^n/k$, comme le montre l'équation 6. Il présente toutefois l'inconvénient d'introduire une erreur d'arrondi du fait que les étapes de divisions par $2^n$, $2^{n-1}$, $2^{n-2}$... sont effectuées sans report après la virgule.

Second aspect de l'invention

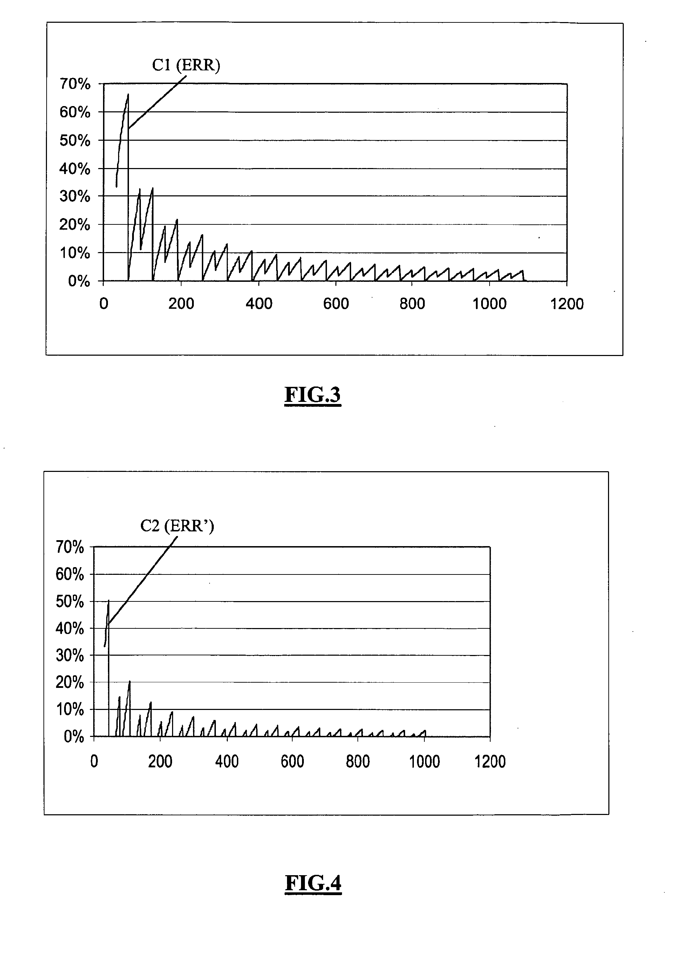

Il peut être démontré que l'erreur sur le résultat est d'autant plus grande que le nombre N1 à diviser est petit. Pour fixer les idées, la figure 3 représente la courbe C1 de l'erreur d'arrondi relative que présente le résultat de la division du nombre N1 par 64/3 tel que fourni par le diviseur de la figure 1.
L'erreur d'arrondi relative "ERR" est définie comme étant égale à :

$$ERR = ER/(N1/64/3) \quad (8)$$

"ER" étant une erreur d'arrondi absolue, qui est définie comme étant égale à :

$$ER = N1/(64/3)-(\text{Partie Entière}(N1/64)+\text{Partie Entière}(N1/32)) \quad (9)$$

La courbe C1 montre que si une erreur d'arrondi relative inférieure à 10% est visée (valeur en ordonnée) il faut que le nombre N1 (en abscisse) soit supérieur à 385.
Or, dans une application décrite plus loin, le nombre N1 est le résultat d'un comptage cadencé par un signal de fréquence Fc et effectué pendant la durée d'un événement. Dans une telle application, l'erreur pourrait donc être diminuée en augmentant la fréquence de comptage Fc de manière que le nombre N1 soit le plus grand possible pour une durée de l'évènement constante. Il suffirait ensuite de diviser le résultat par le nombre au moyen duquel la fréquence de comptage Fc a été augmentée. Toutefois, une telle méthode n'est pas souhaitable car, de façon générale, augmenter la fréquence d'un signal appliqué à un compteur binaire augmente la consommation électrique du compteur (dans les circuits intégrés, la consommation électrique augmente avec la fréquence de commutation).
Le second aspect de l'invention vise ainsi à diminuer l'erreur sur le résultat d'une division de N1 par $2^n$ faite par décalage à droite sans report après la virgule, sans qu'il soit nécessaire d'augmenter la valeur de N1.
Ici, l'idée de l'invention est que pour toute valeur de n connue, il existe un offset (valeur de biais) pouvant être ajouté au nombre N1 avant l'opération de décalage à droite, qui est tel que l'erreur d'arrondi obtenue sera toujours inférieure à l'erreur d'arrondi obtenue sans ajout de l'offset. Cette règle peut être exprimée par la relation suivante :

$$ERR \ [(N1 + offset)/2^n] < ERR \ [N1/2^n] \quad (10)$$

Plus particulièrement, on peut démontrer que la valeur d'offset optimale pour une division par $2^n$ est égale à la moitié du diviseur, soit $2^n/2$ ou $2^{n-1}$, soit encore 32 pour une division par 64, et 16 pour une division par 32.
Le tableau 1 ci-après décrit à titre d'exemple la division binaire du nombre 63 par le nombre 32, effectuée en cinq décalages à droite sans report après virgule, dans laquelle un offset égal à 16 est ajouté au nombre à diviser avant application des décalages à droite.

## Tableau 1

| bits / valeurs décimales | a7 | a6 | a5 | a4 | a3 | a2 | a1 | a0 |
|---|---|---|---|---|---|---|---|---|
| N1 = 63 | 0 | 0 | 1 | 1 | 1 | 1 | 1 | 1 |
| offset = 16 | 0 | 0 | 0 | 1 | 0 | 0 | 0 | 0 |
| N1' = 63 + 16 | 0 | 1 | 0 | 0 | 1 | 1 | 1 | 1 |
| N2= (63 + 16)/32 | 0 | 0 | 0 | 0 | 0 | 0 | 1 | 0 |

On obtient N2 = 00000010 soit 2 en décimal, au lieu de la valeur exacte 2,03. L'erreur est donc faible. Sans l'offset, on aurait obtenu 00000001 soit 1 en décimal et une erreur relative de 100%.

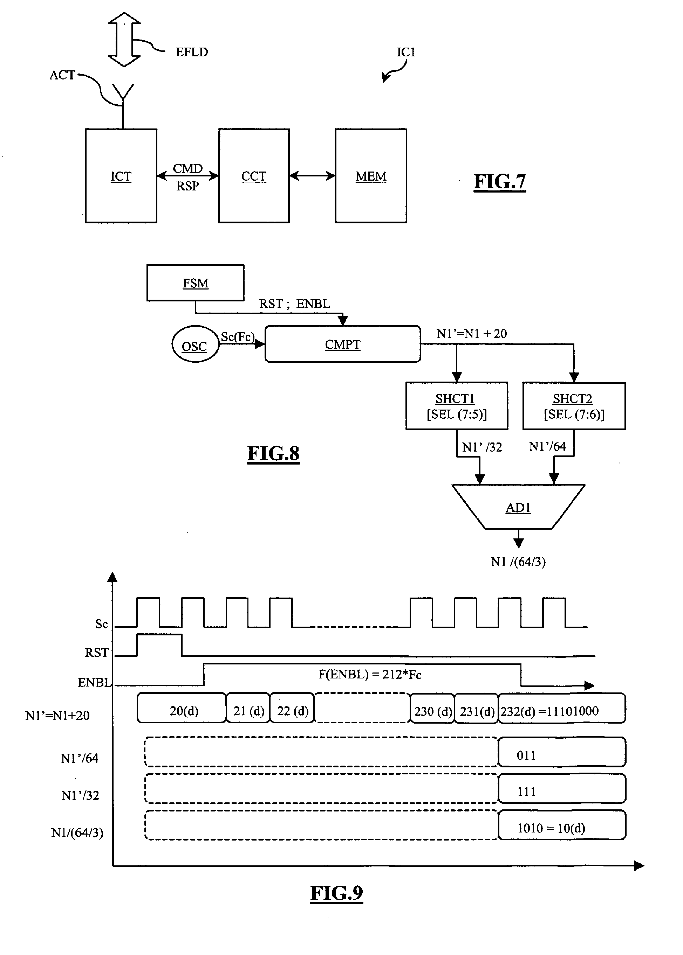

La figure 5 représente un perfectionnement du circuit de la figure 1 basé sur ce second aspect de l'invention. Ici, un offset égal à 16 est ajouté au nombre N1 à l'entrée du circuit à décalage SHCT1 (diviseur par 32) et un offset égal à 32 est ajouté au nombre N1 à l'entrée du circuit à décalage SHCT2 (diviseur par 64). L'ajout des deux offsets est assuré ici au moyen de deux additionneurs AD2 et AD3. Le résultat N2 obtenu est ainsi égal à :

$$\text{N2} = (\text{N1} + 32)/64 + (\text{N1} + 16)/32 \quad (11)$$

Dans ce mode de réalisation, les additionneurs AD2 et AD3 ont de préférence 8 bits en entrée et 9 bits en sortie, afin de prendre en compte le bit de report de somme ("carry") qui peut apparaître lorsque les offsets 16 et 32 sont ajoutés au nombre N1. De même, l'additionneur AD1 présente de préférence 9 bits sur chacune de ses entrées et 8 bits en sortie.

Un autre postulat sur lequel se fonde l'invention est qu'il existe également un offset commun optimal pouvant être ajouté au nombre N1 avant sa division par $2^n$, $2^{n-1}$, $2^{n-2}$... pour minimiser l'erreur sur le résultat de l'équation (6). Dans le cas de la division par 64/3, l'offset commun optimal à ajouter au nombre N1 est égal à 20. Cet offset optimal n'est donc pas égal à la moyenne des deux offsets 16 et 32. Il peut être aisément trouvé pour toute autre valeur de k et de n en balayant plusieurs valeurs d'offset comprises entre les offsets optimaux respectifs pour chacune des divisions.

La figure 6 représente une variante de réalisation du circuit de la figure 5 mettant en oeuvre ce perfectionnement du second aspect de l'invention. Un offset commun égal à 20 est ajouté au nombre N1 à l'entrée du circuit à décalage SHCT1 (diviseur par 32) et à l'entrée du circuit à décalage SHCT2 (diviseur par 64). L'ajout de l'offset commun est assuré par un seul additionneur AD2 ayant 9 bits en sortie. Le résultat N2 obtenu est égal à :

$$\text{N2} = (\text{N1} + 20)/64 + (\text{N1} + 20)/32 \quad (12)$$

Bien entendu, l'opérateur "/" figurant dans les équations 11 et 12 ne désigne pas la division arithmétique classique mais une division binaire sans report après la virgule, sans quoi ces équations seraient inexactes.

L'avantage de l'équation (12) sur l'équation (11) est qu'elle permet de simplifier la structure du diviseur, qui ne comporte que deux additionneurs en figure 6 au lieu de trois additionneurs en figure 5.

Par ailleurs, il sera vu plus loin que cet offset commun optimal peut être ajouté au nombre N1 de façon encore plus simple, sans utiliser un additionneur, lorsque le nombre N1 est fourni par un compteur.

La figure 4 représente la courbe C2 des erreurs d'arrondi relatives ERR' obtenues lorsque la division de N1 est faite conformément à l'équation (12), en ajoutant 20 à N1 avant de le diviser par 32 et 64 et en effectuant les divisions par décalage à droite sans report après la virgule. La courbe C2 est inférieure à la courbe C1 (fig. 3) et montre que l'erreur ERR' est inférieure à l'erreur ERR. Ainsi, si une erreur d'arrondi relative ERR' inférieure à 10% est recherchée, le nombre N1 (en abscisse) doit être supérieur à 174, alors qu'il doit être supérieur à 385 quand l'offset commun n'est pas prévu (courbe C1).

On décrira maintenant une application de l'invention à un circuit intégré sans contact IC1 tel que représenté en figure 7. Le circuit intégré IC1 est un transpondeur UHF comprenant un circuit d'interface de communication sans contact ICT, un circuit de contrôle CCT et une mémoire MEM effaçable et programmable électriquement (EEPROM ou FLASH). Le circuit ICT est relié à un circuit d'antenne ACT en forme de dipôle lui permettant de recevoir des données codées par modulation d'un champ électrique EFLD oscillant à une fréquence UHF, par exemple 800 MHz, le champ EFLD étant émis par un lecteur de circuit intégré sans contact. Le circuit ICT émet également des données, ici par modulation du coefficient de réflexion du circuit d'antenne ACT (technique de rétromodulation appelée "backscattering"). Le circuit de contrôle CCT est de préférence un circuit à logique câblée.

Le circuit CCT reçoit ainsi des commandes CMD via le circuit d'interface ICT (par exemple des commandes de lecture ou d'écriture de la mémoire), et émet des réponses RSP via le circuit ICT. Le protocole de communication sans contact utilisé est par exemple défini par la spécification industrielle EPC™-GEN2.

A l'intérieur du circuit de contrôle CCT est prévu un circuit de synchronisation représenté schématiquement en figure 8. Le circuit de synchronisation comprend un compteur CMPT qui est contrôlé par une machine logique FSM (machine d'états à nombre d'états fini, ou "Finite State Machine"). A cet effet, la machine logique FSM applique au compteur un signal de remise à zéro RST et un signal d'autorisation de comptage ENBL. Le compteur est cadencé par un signal Sc de fréquence Fc fourni par un oscillateur. Le compteur fournit une valeur N1' qui est égale à une valeur de comptage N1 à laquelle est ajouté l'offset égal à 20, déjà décrit plus haut.

Avantageusement, l'offset est ajouté à la valeur de comptage en configurant le compteur de manière q'il se place sur la valeur 20 au lieu de la valeur 0 après application du signal de remise à zéro RST. Ainsi, dès que le comptage commence, la valeur 20 est présente dans le compteur, et se trouve donc additionnée à la valeur de comptage. La sortie du compteur, fournissant la valeur N1'=N1+20, est appliquée aux circuits à décalage SHCT1 et SHCT2 décrits plus haut, effectuant respectivement une division par 32 et une division par 64 par décalage à droite sans report après la virgule. La sortie de chaque circuit SHCT1 et SHCT2 est appliquée comme précédemment à l'additionneur AD1, qui fournit le résultat N1/(64/3).

La machine logique FSM active le compteur en portant le signal ENBL à 1, sur détection d'un évènement déterminé, par exemple la réception d'une trame de synchronisation (signal continu à 1 reçu via l'interface ICT), et remet le signal ENBL à 0 lorsque l'évènement n'est plus détecté. Lorsque le comptage est terminé, la valeur N1/(64/3) fournie par l'additionneur AD1 est utilisée par le circuit intégré pour générer un signal interne dont la période Tr est égale à N1/(64/3)*Tc. Ce signal est donc synchronisé avec un signal d'horloge externe ayant servi à générer le signal de synchronisation (signal d'horloge du lecteur). Ce signal synchronisé est par exemple utilisé comme sous-porteuse pour des étapes de rétromodulation (backscattering) permettant au circuit intégré de renvoyer des données via le circuit d'antenne ACT.

L'offset appliqué à la valeur de comptage N1 permet de minimiser l'erreur d'arrondi pendant les étapes de décalage à droite, ce qui permet de faire fonctionner le compteur CMPT avec une fréquence deux fois plus lente pour obtenir la même précision de division, d'où une puissance électrique consommée plus faible. Vu sous un autre angle, l'offset permet de diminuer l'erreur de division à fréquence de comptage constante.

La figure 9 représente les signaux Sc, RST, ENBL, ainsi que la valeur de comptage N1' (soit N1+20), les valeurs divisées N1'/64 et N1'/32, et le résultat N1/(64/3). Dans l'exemple représenté, le signal ENBL est remis à 0 lorsque la valeur de comptage N' est égale à 232 (les valeurs exprimées en décimal sont repérées par le signe "(d)" sur la figure 9). Le résultat qui devrait être atteint est donc en théorie 212/(64/3) soit 9,93. On obtient avec l'invention la valeur 10, soit une valeur très proche de 9,93.

Pour résumer les avantages que procure l'offset, le tableau 2 résume les opérations élémentaires effectuées par le diviseur avec et sans offset. On voit que la valeur qui serait obtenue sans offset serait égale à 9 au lieu de 9,93 et serait donc entachée d'une erreur importante.

**Tableau 2**

|  | Sans offset | Avec offset |
|---|---|---|
| N1 en décimal | 212 | 232 |
| N1 en binaire | 11010100 | 11101000 |
| N1/64 (six décalages à droite) | 00000011 | 00000011 |
| N1/32 (cinq décalages à droite) | 00000110 | 00000111 |
| N1/(64/3) en binaire | 00001001 | 00001010 |
| N1/(64/3) en décimal | 9 | 10 |

**EP 1 801 693 A1**

Il apparaîtra clairement à l'homme de l'art que la présente invention est susceptible de diverses variantes de réalisation, perfectionnements et applications.

Notamment, bien que l'on ait décrit dans ce qui précède des exemples de réalisation d'un diviseur par 64/3, un diviseur selon l'invention peut être du type configurable, c'est-à-dire se présenter comme un diviseur par $2^n/k$ avec k et n des paramètres variables appliqués au diviseur. Dans ce cas, le diviseur comprend en parallèle une pluralité de diviseurs élémentaires par $2^n$, $2^{n-1}$, $2^{n-2}$, etc.. qui sont activés ou sont au contraire inhibés en fonction de la valeur de k, conformément à l'équation 6. De même, l'offset commun optimal peut être fourni par une table dans laquelle une valeur d'offset optimale est enregistrée pour plusieurs valeurs de k et de n.

**Revendications**

1. Procédé pour diviser un premier nombre binaire N1 par un second nombre binaire pouvant s'écrire sous la forme $2^n/k$, n et k étant des nombres entiers, et obtenir un résultat N2, **caractérisé en ce qu'**il comprend :

   - une étape de calcul de termes $N1*Ki/2^{n-i}$ au moyen d'un premier circuit à logique câblée (SHCT1, SHCT2), pour i allant de 0 à N, les termes Ki étant les bits constitutifs K0, K1, K2,...$K_{N-1}$ du nombre k exprimé en binaire, et
   - une étape d'addition des termes $N1*Ki/2^{n-i}$ au moyen d'un second circuit à logique câblée (AD1).

2. Procédé selon la revendication 1 comprenant, pour le calcul de chaque terme $N1*Ki/2^{n-i}$ pour lequel Ki=1, l'application de n-i décalages à droite aux bits du nombre N1, sans report après la virgule et en introduisant une erreur d'arrondi.

3. Procédé selon la revendication 2, dans lequel l'erreur d'arrondi dans la division de N1 par $2^{n-i}$ est compensée en tout ou en partie en ajoutant un offset au nombre N1 avant d'appliquer les n-i décalages à droite aux bits du nombre N1.

4. Procédé selon la revendication 3, dans lequel un offset identique est ajouté au nombre N1 pour le calcul de chaque terme $N1*Ki/2^{n-i}$ pour lequel Ki=1.

5. Procédé selon la revendication 4, dans lequel le nombre N1 est fourni par un compteur (CMPT) configuré pour compter à partir de l'offset au lieu de compter à partir de 0.

6. Procédé selon l'une des revendications 1 à 5, dans lequel :
   k = 3, et
   $N2 = N1/2^n + N1/2^{n-1}$
   le terme $N1/2^n$ étant calculé en appliquant n décalages à droite aux bits d'un nombre égal à la somme de N1 et d'un premier offset, le terme $N1/2^{n-1}$ étant calculé en appliquant n-1 décalages à droite aux bits d'un nombre égal à la somme de N1 et d'un second offset, les premier et second offsets pouvant être égaux.

7. Circuit diviseur pour diviser un premier nombre binaire N1 par un second nombre binaire pouvant s'écrire sous la forme $2^n/k$, n et k étant des nombres entiers, et obtenir un résultat N2, **caractérisé en ce qu'**il comprend

   - un premier circuit à logique câblée (SHCT1, SHCT2) pour calculer des termes $N1*Ki/2^{n-i}$ pour i allant de 0 à N, Ki étant les bits constitutifs K0, K1, K2,...$K_{N-1}$ du nombre k exprimé en binaire, et
   - un second circuit à logique câblée (AD1) pour additionner les termes $N1*Ki/2^{n-i}$.

8. Circuit diviseur selon la revendication 7, dans lequel le premier circuit à logique câblée (SHCT1, SHCT2) est agencé pour calculer chaque terme $N1*Ki/2^{n-i}$ pour lequel Ki=1 en appliquant n-i décalages à droite aux bits du nombre N1, sans report après la virgule et en introduisant une erreur d'arrondi.

9. Circuit diviseur selon la revendication 8, comprenant des moyens (AD2, AD3, CMPT) pour ajouter un offset au nombre N1 avant d'appliquer les décalages à droite aux bits du nombre N1, de manière à compenser en tout ou en partie l'erreur d'arrondi dans la division de N1 par $2^{n-i}$.

10. Circuit diviseur selon la revendication 9, dans lequel les moyens pour ajouter un offset appliquent un offset identique au nombre N1 pour le calcul de chaque terme $N1*Ki/2^{n-i}$ pour lequel Ki=1.

11. Circuit diviseur selon la revendication 10, dans lequel le nombre N1 est fourni par un compteur échantillonneur configuré pour compter à partir de l'offset au lieu de compter à partir de 0, de manière à fournir le nombre N1 augmenté de l'offset.

**12.** Circuit diviseur selon l'une des revendications 7 à 11, dans lequel :
k = 3, et
$N2 = N1/2^n + N1/2^{n-1}$
et dans lequel :

- le terme $N1/2^n$ est fourni par un premier circuit à logique câblée (SHCT1, SHCT2) qui applique n décalages à droite aux bits d'un nombre égal à la somme de N1 et d'un premier offset, et
le terme $N1/2^{n-1}$ est fourni par un second circuit à logique câblée (AD1) qui applique n-1 décalages à droite aux bits d'un nombre égal à la somme de N1 et d'un second offset, les premier et second offsets pouvant être égaux.

**13.** Circuit intégré (IC1), notamment du type transpondeur, comprenant un circuit diviseur selon l'une des revendications 7 à 12.

**14.** Circuit intégré (IC1) selon la revendication 13, dans lequel le circuit diviseur est agencé pour diviser une valeur de comptage fournie par un compteur (CMPT).

**15.** Circuit intégré selon la revendication 14, dans lequel le compteur (CMPT) est configuré pour compter à partir d'une valeur d'offset au lieu de compter à partir de 0, de manière à fournir le nombre N1 augmenté de l'offset.

**FIG.1**

**FIG.2**

**FIG.5**

**FIG. 6**

**FIG.3**

**FIG.4**

**FIG.7**

**FIG.8**

**FIG.9**

N1'=N1 + 20

Sc(Fc)

RST ; ENBL

OSC

CMPT

FSM

SHCT1
[SEL (7:5)]

SHCT2
[SEL (7:6)]

N1' /32

N1'/64

AD1

N1 /(64/3)

ICT

CCT

MEM

CMD
RSP

EFLD

ACT

IC1

Sc

RST

ENBL

F(ENBL) = 212*Fc

N1'=N1+20

20(d)    21 (d)    22 (d)    230 (d)    231(d)    232(d) =11101000

N1'/64    011

N1'/32    111

N1/(64/3)    1010 = 10(d)

**Office européen des brevets**

**RAPPORT DE RECHERCHE EUROPEENNE**

Numéro de la demande

EP 06 02 5270

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 5 402 369 A (MAIN ET AL) 28 mars 1995 (1995-03-28) * figures 1,3-6 * * tableau 1A * * colonne 6, ligne 5 - ligne 22 * * colonne 7, ligne 54 - ligne 63 * ----- | 1,7 | INV. G06F7/535 |
| X | US 5 001 663 A (PARULSKI ET AL) 19 mars 1991 (1991-03-19) * figures 2,3 * * colonne 3, ligne 66 - colonne 4, ligne 12 * ----- | 1,7 | |
| X | SRINIVASAN P ET AL: "Constant-division algorithms" IEE PROCEEDINGS: COMPUTERS AND DIGITAL TECHNIQUES, IEE, GB, vol. 141, no. 6, 1 novembre 1994 (1994-11-01), pages 334-40, XP006001619 ISSN: 1350-2387 * alinéa [02.4] * ----- | 1,7 | |
| A | US 5 696 713 A (KOVACS ET AL) 9 décembre 1997 (1997-12-09) * colonne 3, ligne 30 - colonne 4, ligne 52 * ----- | 1-15 | DOMAINES TECHNIQUES RECHERCHES (IPC) G06F |
| A | EP 1 220 087 A (SIEMENS AKTIENGESELLSCHAFT) 3 juillet 2002 (2002-07-03) * figures 1-4 * ----- | 1-15 | |

Le présent rapport a été établi pour toutes les revendications

| Lieu de la recherche | Date d'achèvement de la recherche | Examinateur |
|---|---|---|
| Munich | 15 janvier 2007 | Pfab, Stefan |

## ANNEXE AU RAPPORT DE RECHERCHE EUROPEENNE
## RELATIF A LA DEMANDE DE BREVET EUROPEEN NO.

EP 06 02 5270

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

15-01-2007

| Document brevet cité au rapport de recherche | | Date de publication | Membre(s) de la famille de brevet(s) | | Date de publication |
|---|---|---|---|---|---|
| US 5402369 | A | 28-03-1995 | AU | 7216394 A | 06-02-1995 |
| | | | WO | 9502215 A1 | 19-01-1995 |
| US 5001663 | A | 19-03-1991 | DE | 69021164 D1 | 31-08-1995 |
| | | | DE | 69021164 T2 | 11-04-1996 |
| | | | EP | 0424506 A1 | 02-05-1991 |
| | | | JP | 3506088 T | 26-12-1991 |
| | | | WO | 9013866 A1 | 15-11-1990 |
| US 5696713 | A | 09-12-1997 | AUCUN | | |
| EP 1220087 | A | 03-07-2002 | AUCUN | | |

EPO FORM P0460

Pour tout renseignement concernant cette annexe : voir Journal Officiel de l'Office européen des brevets, No.12/82